# EUROPÄISCHE PATENTSCHRIFT

(11) **EP 3 561 353 B1**
(45) Veröffentlichungstag und Bekanntmachung des Hinweises auf die Patenterteilung: **30.03.2022**
(21) Anmeldenummer: 19166968.8
(22) Anmeldetag: 03.04.2019
(51) Int. Cl.: F16L 3/08, A62C 35/68, F16B 7/04, F16L 3/24

(54) **SPANNVORRICHTUNG**
CLAMPING DEVICE
DISPOSITIF DE SERRAGE

(30) Priorität: 24.04.2018 DE 102018109841; 07.11.2018 DE 102018127759
(43) Veröffentlichungstag der Anmeldung: 30.10.2019
(73) Patentinhaber: Salzgitter Mannesmann Stahlhandel GmbH, 40476 Düsseldorf (DE)
(72) Erfinder: MEISTER, Steffen, 30900 Wedemark (DE)
(74) Vertreter: Stoffregen, Hans-Herbert

(56) Entgegenhaltungen:
- EP-A1- 1 621 781
- DE-A1- 2 047 157
- DE-B- 1 219 735
- JP-A- H11 248 037
- US-A1- 2005 072 883
- US-A1- 2008 083 852
- US-A1- 2013 284 862

## Beschreibung

Die Erfindung bezieht sich auf eine Spannvorrichtung zum Verbinden eines langgestreckten ersten Elementes, wie Vierkantprofil, mit einem quer zu diesem verlaufenden zweiten Element, wie Fitting, insbesondere Endfitting eines Sprinklerschlauchs, umfassend
- ein Basiselement, das in einem senkrecht zu dem zweiten Element verlaufenden Schnitt eine U-Form mit einem sich entlang des ersten Elements, insbesondere parallel zum ersten Element, erstreckenden Querschenkel und von diesem ausgehenden Seitenschenkeln aufweist, zwischen denen sich das zweite Element erstreckt, und
- eine Spanneinrichtung, die geeignet ist, dass mittels dieser auf das zweite Element zum Fixieren an dem ersten Element eine Kraft einwirkt,
wobei die Spanneinrichtung einen von dem Querschenkel oder den Seitenschenkeln ausgehenden oder den Querschenkel durchsetzenden Klemmabschnitt aufweist.

Aus der EP 1 621 781 A1 ist eine als Befestigungsvorrichtung bezeichnete Spannvorrichtung zum Verbinden eines langgestreckten Stangenelements mit einem quer zu diesem verlaufenden Trägerprofil bekannt, wobei die Spannvorrichtung ein U-förmiges Basiselement mit Querschenkel und Seitenschenkeln sowie eine Spanneinrichtung mit Klemmabschnitt aufweist.

Gegenstand der US 2005/0072883 A1 ist eine Spannvorrichtung zum Verbinden eines ersten langgestreckten Elements in Form eines Rohrs mit einer quer zu dieser verlaufenden Strebe. Die Spannvorrichtung weist ein U-förmiges Basiselement auf, das von einem ein Klemmelement aufweisenden Schraubenelement durchsetzbar ist, um das Rohr gegenüber der Strebe zu fixieren.

Eine Sprinklerklemme nach der US 2013/0284862 A1 weist ein U-förmiges Basiselement mit Querschenkel und Seitenschenkeln sowie eine Spanneinrichtung mit Klemmabschnitt auf.

Mit einem Verbindungselement nach der DE 2 047 157 A1 werden Tragschienen kraft- und formschlüssig miteinander verbunden.

Eine Spannvorrichtung nach der DE 20 2014 008 931 U1 ist für einen Sprinkler bestimmt und weist ein als Manschette bezeichnetes U-förmiges Basiselement auf, zwischen dessen Seitenschenkeln ein zylindrischer Abschnitt eines Sprinklers verläuft. In den Endabschnitten der Seitenschenkel ist ein Vierkantrohr klemmend fixierbar. Hierzu sind Keilelemente vorgesehen, die sich zwischen dem Querschenkel der Manschette und dem zylinderförmigen Abschnitt erstrecken und mittels einer Schraube zueinander verstellbar sind.

Nachteilig dieser Konstruktion ist, dass ein eine gewisse Fingerfertigkeit verlangendes Einsetzen der Keilelemente und Verbinden dieser mittels der Schraube erforderlich ist. Die Montage ist daher zeitaufwendig. Ferner sind Fertigungsaufwand bzw. Kosten für die Keilsegmente nachteilig.

Der KR 2004 0062126 A ist eine Spannvorrichtung zu entnehmen, die zueinander verstellbare Schenkel aufweist, aus denen nach innen abragende federartige Zungen ausgeschnitten sind, die zum Aufeinanderzubewegen in den Schlitz eines Vierkantprofils einbringbar sind, wobei das Vierkantprofil sodann zu den Zungenwurzeln verstellt werden muss.

Aus der KR 1020070117796 A ist eine Spannvorrichtung bekannt, um ein Vierkantprofil mit dem Rand einer U-förmigen Schiene zu verbinden. Die Spannvorrichtung weist im Schnitt eine U-Form mit Querschenkel und Seitenschenkeln auf, um die Elemente miteinander zu verbinden. Dabei wird der Querschenkel von einer Schraube durchsetzt, die auf das Vierkantprofil einwirkt, damit dieses auf den Rändern der U-förmigen Schiene mit Kraftschluss aufliegt.

Gegenstand der KR 101 289 274 B1 ist eine Spannvorrichtung, die die Form eines U's aufweist, um ein Fitting aufzunehmen. Dieses wird in der Spannvorrichtung durch Verschwenken eines Hebels klemmend fixiert. Zwischen Seitenschenkeln der Klemmvorrichtung verläuft ein Vierkantrohr. Dieses muss zunächst in die Klemmvorrichtung eingeführt werden, um sodann das Fitting fixieren zu können.

Um ein Fitting in einer Spannvorrichtung zu fixieren, wird nach der US 2013/0048822 A1 ein Hebelelement verwendet.

Eine Spannvorrichtung mit U-förmiger Backe und Sperrarm, der schwenkbar an der Backe gelagert ist, wird zum Fixieren eines Rohres nach der DE 693 08 860 B2 benutzt.

Von Seitenschenkeln einer Spannvorrichtung geht nach der US 2011/0186697 A1 ein Hebelelement aus, um ein Fitting zu fixieren.

Aus der US 2005/0139743 A1 ist eine Spannklammer bekannt, deren Schenkel in den Schlitz eines U-Profils eingeschoben werden, um ein Auseinanderbiegen der Schenkel zu verhindern.

In der EP 2 944 737 B1 wird eine Spannvorrichtung zum Verbinden eines Vierkantprofils mit einem zweiten Profil beschrieben, die eine Spannklammer mit zwei aufeinander zu verstellbaren Schenkeln mit jeweils einer Aussparung zur Aufnahme und Fixierung des Vierkantprofils aufweist.

Der vorliegenden Erfindung liegt die Aufgabe zugrunde, eine Spannvorrichtung zuvor beschriebener Art so weiterzubilden, dass eine einfache Montage ermöglicht wird. Ein sicheres Fixieren der Elemente zueinander, insbesondere des zweiten Elements an dem ersten Element soll ermöglicht werden. Ferner soll eine kostengünstige Herstellung bei einfacher Konstruktion möglich sein.

Zur Lösung der Aufgabe wird im Wesentlichen vorgeschlagen, dass die Spanneinrichtung des Weiteren einen von dem Basiselement ausgehenden eine Durchgangsöffnung aufweisenden senkrecht sowohl zu den Seitenschenkeln als auch dem Querschenkel verlaufenden Halteabschnitt aufweist, der zwischen den Seitenschenkeln fixiert ist, wobei die Durchgangsöffnung zur Aufnahme eines Betätigungselements derart ausgebildet ist, dass das Betätigungselement beim Verstellen in Richtung des Klemmabschnitts auf diesen einwirkt, der seinerseits zum Anliegen an dem zweiten Element und zur Kraftbeaufschlagung zur Fixierung an dem ersten Element ausgebildet ist.

Dabei ist insbesondere vorgesehen, dass die Seitenschenkel in ihren freien Endbereichen zum abschnittweise Unterfassen des ersten Elementes hakenförmig ausgebildet sind. Aufgrund der erfindungsgemäßen Lehre ist mit konstruktiv einfachen Maßnahmen ein Verbinden des zweiten Elements mit dem ersten Element in gewünschter Position möglich. Hierzu ist es allein erforderlich, dass die Spannvorrichtung das zweite Element, insbesondere ein Fitting, wie Endfitting eines Sprinklers, aufnimmt, um sodann diese Einheit auf das erste Element, wie Vierkantrohr, zu stecken bzw. das erste Element in die Seitenschenkel einzuhaken, um sodann durch das Betätigungselement den Klemmabschnitt derart zu verschwenken und somit auf das zweite Element einwirken zu lassen, dass durch entsprechende Kraftbeaufschlagung das zweite Element mit der Spannvorrichtung an dem ersten Element fixiert ist. Da der von dem Betätigungselement durchsetzte Halteabschnitt zwischen den Seitenschenkeln verläuft, die seitlich das zweite Element begrenzen, kann bei einer Deckenmontage problemlos vom Bodenbereich ausgehend das Betätigungselement betätigt werden. Hierbei handelt es sich insbesondere um eine Schraube, dessen Längsachse parallel zu der des zweiten Elements, wie Fitting, verläuft. Sodann kann z.B. mittels eines Steckschlüssels die Schraube verstellt werden. Eine problemlose Überkopfmontage ist möglich.

Insbesondere ist vorgesehen, dass das erste Element ein Rechteck- wie Quadratrohr ist, wobei die Schenkellänge 15 mm betragen kann. Das zweite Element ist insbesondere ein Fitting, vorzugsweise ein Endfitting eines Sprinklerschlauchs.

Um ein Basiselement hoher Stabilität zur Verfügung zu stellen, ist insbesondere vorgesehen, dass der Klemmabschnitt ein gesondertes als Klemmelement zu bezeichnendes Bauteil ist und lösbar verbunden mit und verschwenkbar zu dem Basiselement ist.

Dabei zeichnet sich die Erfindung auch dadurch aus, dass das Klemmelement einen in Bezug auf das zweite Element fernliegenden ersten Abschnitt und einen mit dem zweiten Element wechselwirkenden zweiten Abschnitt aufweist, und dass der erste Abschnitt den Querschenkel des Basiselements durchsetzt oder von jedem seiner Seitenränder ein Vorsprung ausgeht, der in eine Aufnahme, wie Aussparung, der Seitenschenkel zur Lagerung des Klemmelements eingreift.

Es besteht die Möglichkeit, dass der dem Querschenkel durchsetzende erste Abschnitt über einen Mittelabschnitt in den zweiten Abschnitt übergeht.

Bevorzugterweise ist vorgesehen, dass die einander zugewandten Flächen von dem Mittelabschnitt und dem ersten Abschnitt einerseits und dem zweiten Abschnitt andererseits jeweils einen stumpfen Winkel einschließen.

Um auf konstruktiv einfache Weise das Klemmelement in dem Basiselement zu lagern, ist vorgesehen, dass jeder Seitenschenkel des Basiselements einen vorzugsweise V-förmig ausgebildeten Ausschnitt aufweist, der in die Aufnahme also Lagerung für das Klemmelement übergeht, wobei die Aufnahme vorzugsweise an dem Querschenkel angrenzt.

Es besteht auch die Möglichkeit, dass oberer Rand eines jeden Seitenschenkels in einen in Richtung des Querschenkels, insbesondere dessen Außenseite, sich erstreckenden bogenförmigen Abschnitt übergeht, der die Aufnahme begrenzt.

Um auszuschließen, dass beim Transport der Spannvorrichtung das Klemmelement aus dem Basiselement herausfällt, ist vorgesehen, dass sich das Klemmelement zwischen dem Halteabschnitt und einem über der jeweiligen Innenseite der Seitenschenkel vorstehenden als Verliersicherung dienenden Vorsprung erstreckt.

Durchsetzt das Klemmelement insbesondere eine schlitzförmige Öffnung des Querschenkels, ist vorgesehen, dass der den Querschenkel durchsetzende erste Abschnitt des Klemmelements eine einen Vorsprung bildende Prägung aufweist, die als Verliersicherung dient.

Nach einem alternativen Vorschlag sieht die Erfindung vor, dass der Klemmabschnitt insbesondere ein zumindest abschnittsweise aus dem Querschenkel ausgeschnittener Abschnitt ist.

Erfindungsgemäß wird zum fixierenden Positionieren des ersten Elements an dem zweiten Element ein Klemmabschnitt bzw. -element benutzt, der durch Verstellen eines auf den Klemmabschnitt bzw. das Klemmelement einwirkenden Betätigungselementes, insbesondere formschlüssig mit dem zweiten Element, wie Endfitting, eines Sprinklerschlauchs, zusammenwirkt, wodurch wiederum das erste Element, wie das Vierkantrohr, fixierend an Abschnitten der Seitenschenkel festgeklemmt wird bzw. die Seitenschenkel und damit die Spannvorrichtung mit dem zweiten Element an dem ersten Element fixiert werden.

Zum Befestigen bzw. Fixieren weisen erwähntermaßen die Seitenschenkel Aufnahmen auf, die öffnungsseitig hakenförmig ausgebildet sind und somit abschnittsweise das erste Element unterfassen können. Somit ist ein einfaches Einhängen der Spannvorrichtung möglich, wodurch eine Endmontage ohne Probleme erfolgen kann.

Insbesondere ist vorgesehen, dass das Betätigungselement als Schraubbolzen ausgebildet ist, der die ein Innengewinde aufweisende Durchgangsöffhung in dem Halteelement durchsetzt und beim Drehen parallel zu dem zweiten Element verstellt wird. Somit besteht die Möglichkeit dann, wenn die Spannvorrichtung im Deckenbereich eines Raumes eingesetzt wird, also insbesondere bei einer Sprinkleranlage, dass vom Boden ausgehend die Spannvorrichtung positioniert und sodann die zueinander ausgerichteten ersten und zweiten Elemente zueinander fixiert werden.

Die Spannvorrichtung selbst kann aus einem Blechelement ausgestanzt, um sodann im erforderlichen Umfang gebogen zu werden. Dabei kann zum Beispiel ein Blechmaterial einer Dicke d mit 1,0 mm ≤ d ≤ 3,0 mm, insbesondere d in etwa 2 mm, benutzt werden.

Des Weiteren sieht eine Weiterbildung der Erfindung vor, dass das Halteelement integral von einem der Seitenschenkel ausgeht und in dem anderen Seitenschenkel fixiert ist, vorzugsweise durch Eingreifen eines endseitigen Abschnitts des Halteelements in eine Aufnahme, wie Schlitz, des anderen Seitenschenkels. Zusätzlich oder alternativ kann vorgesehen sein, dass Heftpunkte gesetzt werden bzw. ein Verschweißen des endseitigen Abschnitts mit einem Seitenschenkel erfolgt, wodurch das Halteelement mit dem Seitenschenkel derart verbunden ist, dass ein Lösen nicht mehr möglich ist. Gleichzeitig wird die Steifigkeit der Spannvorrichtung erhöht.

Um auch nach bereits erfolgter Fixierung der Elemente zueinander ein Lösen der Spannvorrichtung und somit zum Beispiel ein Nachjustieren zu ermöglichen, sieht die Erfindung vor, dass ein einen Verformungsbereich bildender Übergangsbereich zwischen dem Querschenkel und dem Klemmabschnitt materialgeschwächt ist, insbesondere im Übergangsbereich Aussparungen, wie Ausklinkungen, vorhanden sind.

Durch diese Materialschwächung wird dem Grunde nach ein Biegebereich bzw. eine Biegelinie vorgegeben.

In Weiterbildung der Erfindung ist vorgesehen, dass der Klemmabschnitt aus einem von dem Querschenkel ausgehenden inneren ersten Abschnitt und einem einen stumpfen Winkel zu diesem einschließenden zweiten Abschnitt besteht, der zum Anliegen, insbesondere formschlüssigen Anliegen an dem zweiten Element, ausgebildet ist.

Im vorderen Endbereich des zweiten Abschnitts weist dieser eine Breite auf, die gleich oder in etwa gleich dem Abschnitt zwischen den Innenseiten der Seitenschenkel ist. Hierdurch erfolgt eine seitliche Abstützung des Klemmabschnitts bzw. Klemmelements, so dass eine Drehung des Klemmabschnitts bzw. -elements insbesondere dann ausgeschlossen ist, wenn der Klemmabschnitt bzw. das Klemmelement mit dem zweiten Element, also insbesondere einem Endfitting, wechselwirkt.

Um eine hinreichende Steifigkeit für die Spannvorrichtung zu erreichen, wird in Weiterbildung vorgeschlagen, dass jeder Seitenschenkel eine Materialprägung aufweist. Entsprechend kann der Klemmabschnitt eine Prägung, wie Längsprägung, aufweisen.

Zur Montage ist im Falle eines Einsatzes für eine Sprinkleranlage Folgendes anzumerken. Von einer Decke werden Deckenprofile abgehängt, an denen Vierkantrohre befestigt sind. Durch die Seitenschenkel der Spannvorrichtung liegt ein Endfitting formschlüssig in der Spannvorrichtung. Dabei verläuft das Endfitting zwischen den Seitenschenkeln, die an gegenüberliegenden Seiten an dem Endfitting anliegen. Ein Monteur hängt die Spannvorrichtung mit dem Endfitting an das mit dem Deckensystem fixierte Vierkantrohr. Sodann wird die Spannvorrichtung auf dem Vierkantrohr justiert, um form- und kraftschlüssig den Endfitting mit der Spannvorrichtung an der gewünschten Stelle des Vierkantrohres zu fixieren. Hierzu wird der Bolzen bzw. Gewindestift gegen den Klemmabschnitt bzw. das Klemmelement verstellt.

Das außenseitig eine Mehrkantgeometrie aufweisende Endfitting liegt am Vierkantrohr form- und kraftschlüssig an, und zwar in Längsrichtung des Endfittings kraftschlüssig und radial zum Fitting gegen ein Verdrehen dieses formschlüssig. Der Formschluss gegen ein Verdrehen ist besonders hervorzuheben, da beim Einschrauben bzw. Verstellen bzw. Drehen oder Lösen des Sprinklerkopfs ein erhebliches Drehmoment auf den Endfitting einwirkt. Die Eigenschaft des Formschlusses ist daher von Vorteil.

Durch die erfindungsgemäße Lehre wird eine Spannvorrichtung zur Verfügung gestellt, mittels der das zum Beispiel als Endfitting eines Sprinklerschlauchs ausgebildete zweite Element an dem vorzugsweise als Vierkantrohr ausgebildeten ersten Element befestigt wird. Die Spannvorrichtung ermöglicht bei der Montage ein einfaches Positionieren und Justieren des zweiten Elementes gegenüber dem ersten Element, wobei das zweite Element entlang seiner Längsachse und/oder parallel zur Längsachse des ersten Elementes, also entlang von diesem, verstellt werden kann.

Die Zugänglichkeit zu dem die Kraft auf das zweite Element in Richtung des ersten Elements ausübenden Klemmabschnitt bzw. -element kann über eine von einem Werkzeug, wie Inbusschlüssel, durchsetzte Öffnung oder Bohrung in einer geschlossenen Wand- oder Deckenkonstruktion erfolgen, die auch zur Durchführung eines Sprinklerkopfs vorgesehen sein kann. Folglich ist auch nach Montage einer geschlossenen Decken- bzw. Wandkonstruktion ein nachträgliches Positionieren und Justieren des zweiten Elementes gegenüber dem ersten Element möglich.

Ein weiterer Vorteil der erfindungsgemäßen Lehre ist Nachstehendem zu entnehmen. So kann die Spannvorrichtung im Lieferzustand bei der Montage problemlos von der Seite zuerst über das zweite Element, wie Endfitting, geführt bzw. geschoben und sodann quasi zeitgleich über das erste Element, das heißt, insbesondere dem Vierkantprofil geführt bzw. eingehakt werden, ohne dass es erforderlich ist, dass an der Spannvorrichtung eine zusätzliche Verriegelung oder ähnliches, wie Öffnen oder Schließen, erfolgen muss. Hierdurch ergibt sich der Vorteil, dass die beiden Elemente nicht axial in die Spannvorrichtung eingebracht werden müssen, zumal eine diesbezügliche Ausrichtung aufgrund bauseitiger Montageabläufe häufig nicht möglich ist.

Die Erfindung zeichnet sich daher auch aus durch ein Verfahren zum Montieren eines Fittings, insbesondere Endfittings eines Sprinklerschlauchs, an einem Vierkantrohr unter Verwendung einer Spannvorrichtung, die im montierten Zustand in einer senkrecht zur Längsachse des Fittings verlaufenden Ebene eine U-Form mit Seitenschenkeln und diese verbindendem Querschenkel aufweist, insbesondere unter Verwendung einer Spannvorrichtung, wobei die Spannvorrichtung radial zu dem Fitting zu dessen Aufnahme bewegt und nach Einbringen des Fittings in die Spannvorrichtung zwischen den Seitenschenkeln die Spannvorrichtung in das Vierkantrohr über hakenförmig ausgebildete Endabschnitte der Seitenschenkel eingehakt wird, wobei insbesondere das Fitting kraftschlüssig in Längsrichtung des Fittings und radial formschlüssig an dem Vierkantrohr anliegt.

Weitere Merkmale, Einzelheiten und Vorteile der Erfindung ergeben sich aufgrund der nachfolgenden Beschreibung sowie anhand der Zeichnungen.

Es zeigen:
- Fig. 1: eine isometrische Darstellung einer Spannvorrichtung mit zueinander fixiertem ersten und zweiten Element im Einbauzustand,
- Fig. 2: eine Rückansicht der Darstellung gemäß Fig. 1,
- Fig. 3: einen Schnitt entlang der Linie A-A in Fig. 2,
- Fig. 4: eine Ansicht Z in Fig. 3,
- Fig. 5: eine Schnittdarstellung der Fig. 1,
- Fig. 6: eine Abwicklung der Spannvorrichtung,
- Fig. 7: eine erste perspektivische Darstellung der Spannvorrichtung,
- Fig. 8: eine zweite perspektivische Darstellung der Spannvorrichtung,
- Fig. 9: eine Seitenansicht der Spannvorrichtung,
- Fig. 10: eine Rückansicht der Spannvorrichtung,
- Fig. 11: eine zweite Ausführungsform einer Spannvorrichtung in perspektivischer Darstellung,
- Fig. 12: die Spannvorrichtung gemäß Fig. 11 vor der Montage und im Halbschnitt,
- Fig. 13: die Spannvorrichtung gemäß Fig. 11 und 12 in montierter Position und im Halbschnitt,
- Fig. 14: eine dritte Ausführungsform einer Spannvorrichtung in perspektivischer Darstellung,
- Fig. 15: die Spannvorrichtung gemäß Fig. 14 in Montagestellung und im Halbschnitt,
- Fig. 16: eine vierte Ausführungsform einer Spannvorrichtung in perspektivischer Darstellung und
- Fig. 17: die Spannvorrichtung gemäß Fig. 16 in Montagestellung und im Halbschnitt.

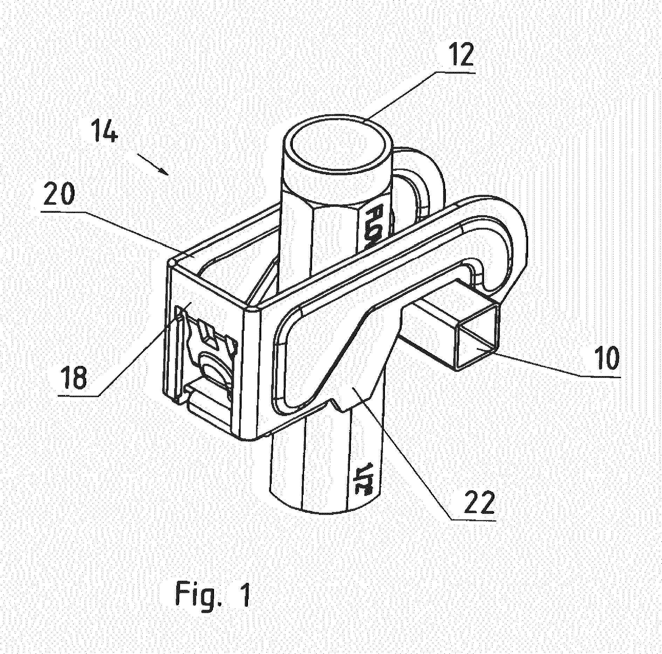

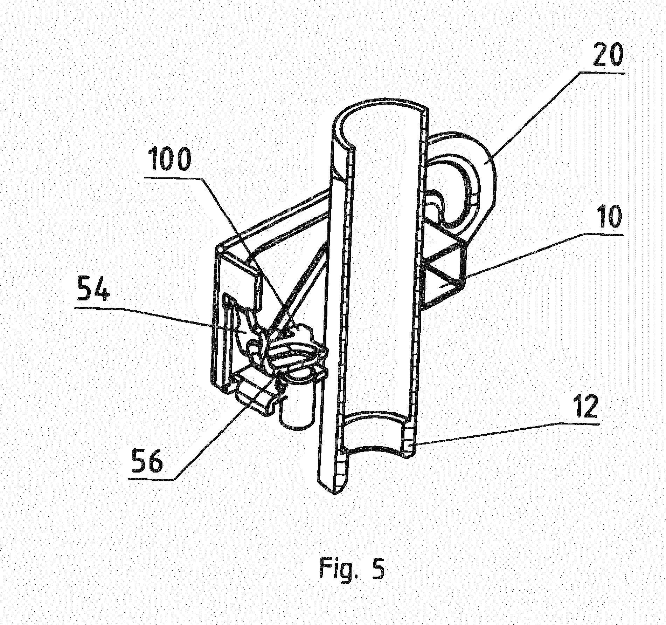

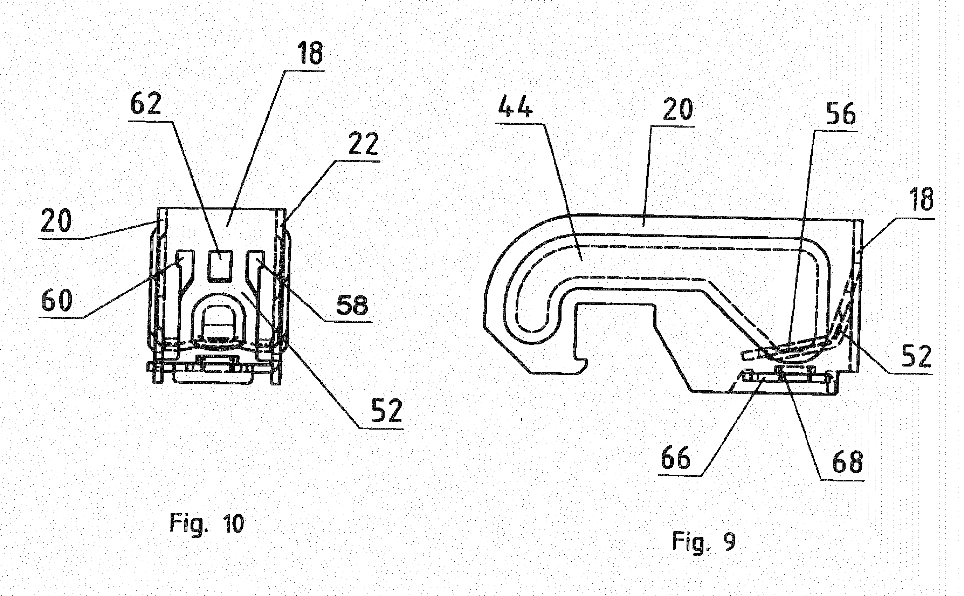

In den Fig. 1 bis 10 ist eine erste Ausführungsform einer erfindungsgemäßen Spannvorrichtung 14 dargestellt, um an einem als erstes Element bezeichneten Vierkantrohr 10 ein als zweites Element bezeichnetes Rohrelement 12, wie Endfitting eines Sprinklerschlauchs, positionsgenau zu fixieren. Das Rohrelement kann außenseitig die Geometrie eines Mehrkant- wie Achtkantrohrs aufweisen.

Bei dem ersten und zweiten Element 10, 12 kann es sich auch um andere langgestreckte Elemente handeln, zum Beispiel Streben, die Verkleidungs- oder Wandelemente aufnehmen.

Um an dem ersten Element 10 - nachstehend grundsätzlich als Vierkantrohr bezeichnet - das zweite Element 12 - nachstehend grundsätzlich als Fitting genannt - zu fixieren, wird die Spannvorrichtung 14 verwendet, mittels der das Fitting 12 in gewünschter Position an dem Vierkantrohr 10 fixiert wird.

Wie sich aus den zeichnerischen Darstellungen ergibt, besteht die Spannvorrichtung 14 aus einem eine U-Form aufweisenden Basiselement 16, das einen Querschenkel 18 und von diesem ausgehende Seitenschenkel 20, 22 aufweist, die sich senkrecht zu dem Querschenkel 18 erstrecken. In der Montagestellung verläuft das Fitting 12 zwischen den Seitenschenkeln 20, 22, wie sich aus den Fig. 1 bis 5 ergibt.

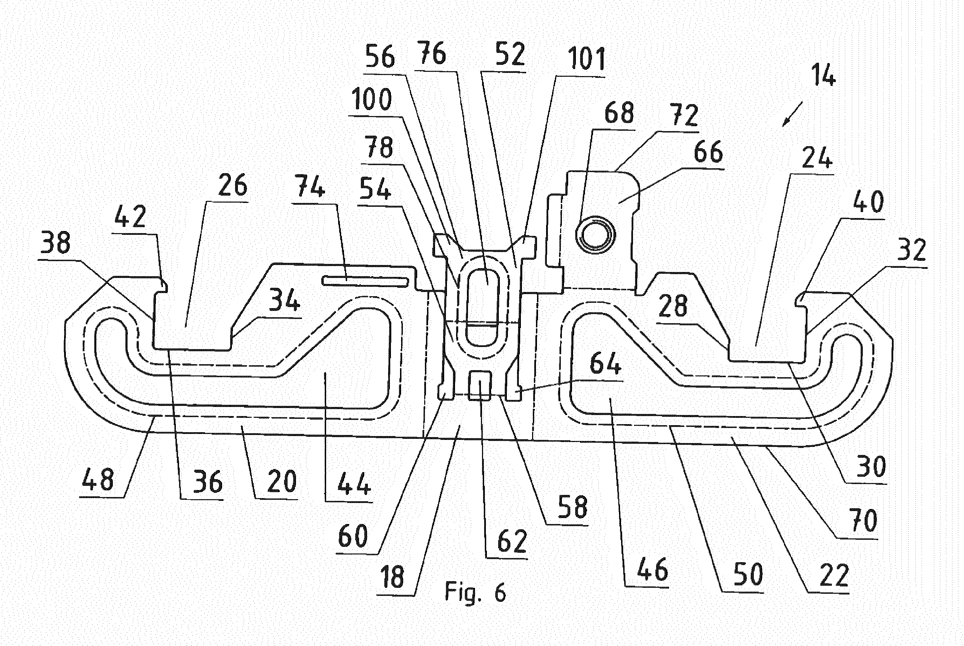

Die Spannvorrichtung 14 wird vorzugsweise aus einem zum Beispiel 2 mm dicken Blech ausgestanzt. Eine Abwicklung der Spannvorrichtung 14 ist der Fig. 6 zu entnehmen.

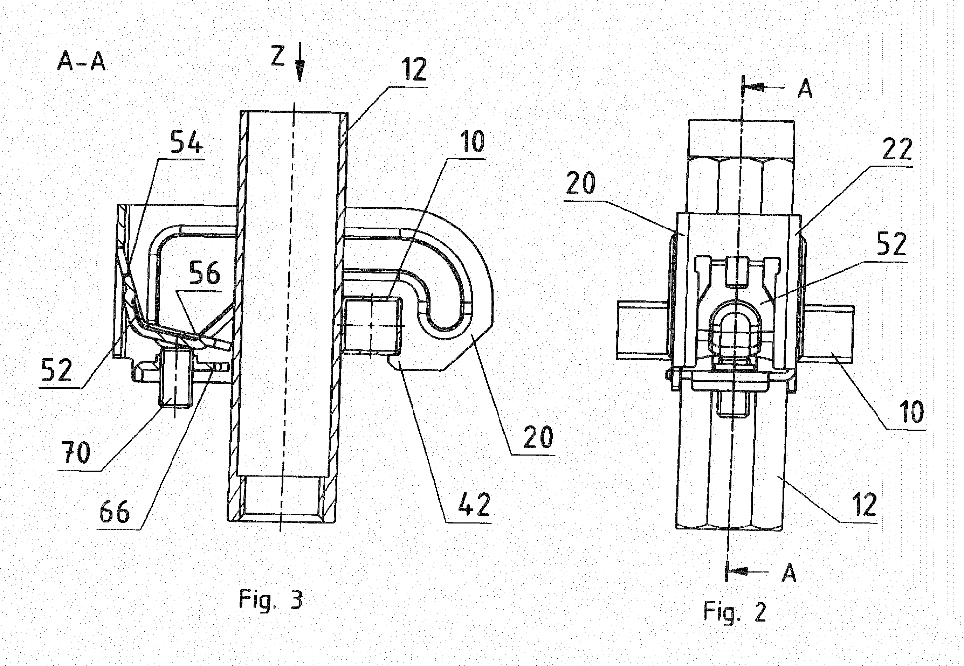

Die Seitenschenkel 20, 22 weisen endseitig eine hakenförmige Geometrie mit jeweils einer Aussparung 24, 26 auf, die geometrisch zur Aufnahme des Vierkantrohrs 10 ausgelegt ist, also im Ausführungsbeispiel 3 senkrecht zueinander verlaufende Begrenzungen 28, 30, 32 bzw. 34, 36, 38 aufweisen. Von der parallel zur Biegelinie zwischen dem Querschenkel 18 und den Seitenschenkeln 20, 22 verlaufenden äußeren Begrenzung 32, 38 der Aussparung 24, 26 geht ein parallel zu der in Längsrichtung des Schenkels 20, 22 verlaufenden Begrenzung 30, 32 verlaufender Abschnitt 40, 42 aus, der bei in die Aussparung 24, 26 eingesetztem Vierkantrohr 10 dieses unterfasst, wie sich aus der Fig. 3 ergibt. Somit ist ein Einhaken oder Einhängen der Spannvorrichtung 14 zusammen mit dem Fitting 12 insbesondere zur Vormontage möglich. Auch ist nach der Befestigung an dem Vierkantrohr 10 sichergestellt, dass die Spannvorrichtung 14 sich nicht unbeabsichtigt lösen kann.

Jeder Seitenschenkel 20, 22 weist des Weiteren - an den Verlauf der Außengeometrie angepasst - eine Materialprägung 44, 46 auf, die von Rändern 48, 50 begrenzt ist.

Aus dem Querschenkel 18 ist ein Abschnitt eines Klemmabschnitts 52 ausgeschnitten, der sich bereichsweise über den Querschenkel 18 hinaus erstreckt, wie der Fig. 6 zu entnehmen ist. Der Klemmabschnitt 52 weist entsprechend der Darstellung gemäß Fig. 3 einen von dem Querschenkel 18 ausgehenden inneren Abschnitt als ersten Abschnitt 54 und einen äußeren Abschnitt 56 auf, der in nachstehend beschriebener Weise mit dem Fitting 12 wechselwirkt, um das Fitting an dem Vierkantrohr 10 klemmend zu positionieren. Hierzu wird von dem zweiten Abschnitt 56 des Klemmabschnitts 52 eine Kraft auf das Fitting 12 und somit auf das mit diesem sich in Kontakt befindlichen Vierkantrohr 10 eingeleitet, wodurch das Fixieren und klemmendes Positionieren ermöglicht wird. Dabei ist der zweite Abschnitt 56 derart ausgebildet, dass das Fitting 12 bereichsweise formschlüssig umgeben wird.

Ferner weist der dem Fitting 12 zugewandte Endabschnitt des Klemmabschnitts 52 seitlich abragende Abschnitte 100, 101 auf, um eine seitliche Abstützung des Klemmabschnitts 52 an den Seitenschenkeln 20, 22 zu ermöglichen. Die seitlichen Außenränder der Abschnitte 100, 101 weisen folglich einen Abstand zueinander auf, der etwa gleich oder gleich dem Abstand zwischen den Innenseiten der Seitenschenkel 20, 22 ist. Die auch als Nasen zu bezeichnenden seitlichen Vorsprünge 100, 101 des Klemmabschnitts 52 legen sich bei Einwirkung eines Drehmoments auf das Fitting 12 an eine der Innenseiten der Seitenschenkel 20, 22 an, wodurch eine Verformung des Übergangsbereichs 58 vermieden bzw. weitgehend vermieden wird.

Um beim Nachjustieren den Klemmabschnitt 52 von dem Fitting 12 zu lösen und somit das Fitting 12 entlang seiner Längsrichtung und/oder entlang des Vierkantrohres 10 verstellen zu können, sind im Übergangsbereich 58 zwischen dem Querschenkel 18 und dem Klemmabschnitt 52 Aussparungen bzw. Ausklinkungen 60, 62, 64 vorgesehen, durch die ein Biegebereich bzw. eine Biegelinie vorgegeben wird und gleichzeitig eine gewünschte Federwirkung erzielt wird.

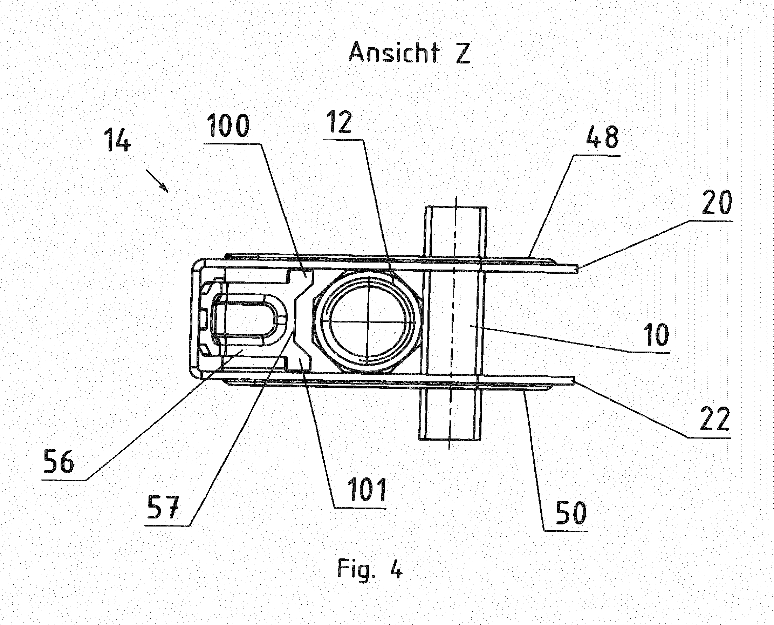

Die mögliche formschlüssige Verbindung wird z. B. aus der Fig. 4 erkennbar, da das Fitting 12 als Mehrkantrohr ausgebildet ist und der Endbereich 57 des zweiten Abschnitts 56 des Klemmabschnitts 52 geometrisch entsprechend ausgebildet ist.

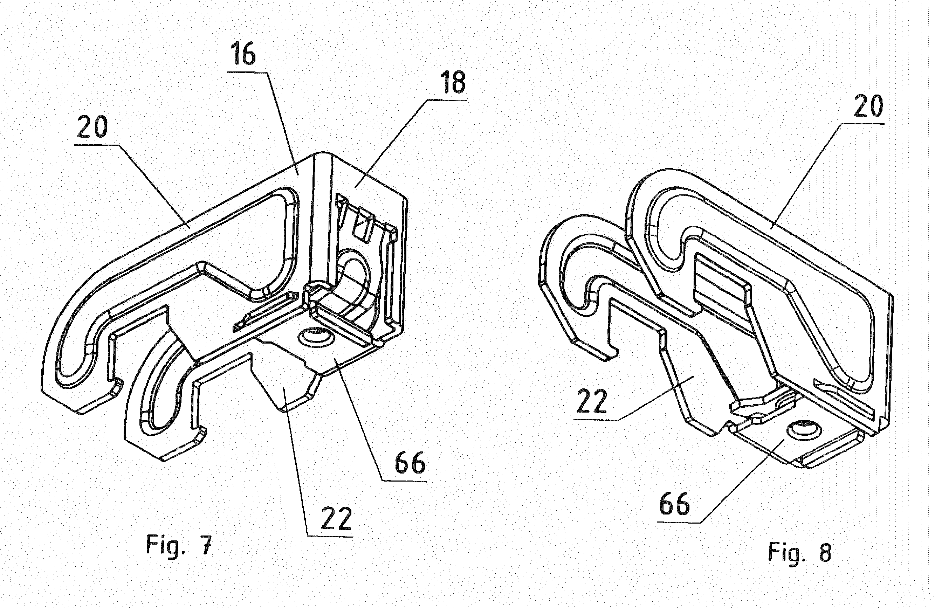

Damit der Klemmabschnitt 52 in Richtung des Fittings 12 verstellt werden kann, um an diesem fixierend anzuliegen, ist ein Halteabschnitt 66 vorgesehen, der entsprechend der Abwicklung gemäß Fig. 6 von dem Seitenschenkel 22 ausgeht und derart zu diesem gebogen wird, dass der Halteabschnitt 66 eine Ebene aufspannt, die senkrecht zu den Seitenschenkeln 20, 22 und somit auch zu dem Querschenkel 18 verläuft, wie sich insbesondere aus den Darstellungen der Fig. 7, 8, 9 und 10 ergibt.

Der Halteabschnitt 66 weist eine ein Innengewinde aufweisende Durchgangsbohrung 68 auf, die von einem als Schraubbolzen 70 bzw. Gewindestift ausgebildeten Betätigungselement durchsetzbar ist, der folglich parallel zu dem Fitting 12 verstellbar ist. Hierzu wird der Schraubbolzen bzw. Gewindestift 70 von der Unterseite der Spannvorrichtung 14 mit einem entsprechend geeigneten Werkzeug erfasst.

Wird der Gewindestift 70 in die Öffnung 68 hineingedreht, so bewegt sich der Gewindestift 70 in Richtung des Klemmabschnitts 52 und kommt zum Anliegen an dessen äußeren zweiten Abschnitt 56. Bei weiterem Hineindrehen des Gewindestiftes 70 wird der Klemmabschnitt 52 und somit der Abschnitt 56 zum Anliegen an das Fitting 12 gebracht, wodurch wiederum eine Kraftbeaufschlagung auf das Vierkantrohr 10 erfolgt, so dass dieses von den Aussparungen 24, 26 klemmend aufgenommen und somit durch die Spannvorrichtung 14 das Fitting 12 an dem Vierkantrohr 10 fixiert ist.

Soll ein Nachjustieren erfolgen, wird der Bolzen 70 zurückgedreht, so dass sich der Klemmabschnitt 52 zurückbewegt. Die hierzu erforderliche Federwirkung wird durch die Materialschwächung im Verformungsbereich, also Übergangsbereich 58 zwischen dem Querschenkel 18 und dem Klemmabschnitt 52 erreicht.

Damit der Halteabschnitt 66 eindeutig fixiert ist, greift im Ausführungsbeispiel dessen äußerer in der Abwicklung parallel zum Längsrand der Spannvorrichtung 14 verlaufender Endbereich 72 in eine entsprechende schlitzförmige Aussparung 74 des Seitenschenkels 20 ein. Gegebenenfalls kann der Halteabschnitt 66 zusätzlich geheftet sein, damit ein Auseinanderbiegen der Spannvorrichtung 14 nicht mehr möglich ist.

Wie die Seitenschenkel 20, 22 kann auch der Klemmabschnitt 52 in dessen Längsrichtung verlaufend eine Materialprägung 76 aufweisen, die von einem Rand 78 umgeben ist.

Zu der Fig. 6 ist ergänzend anzumerken, dass die gestrichelten Linien, die sich aus kürzeren und längeren Abschnitten zusammensetzen, die Biegelinien symbolisieren, um die das Blech gebogen wird, um die Spannvorrichtung 14 entsprechend der Darstellung z.B. in den Fig. 7 und 8 zu erhalten.

Ansonsten sind die Figuren selbsterklärend.

Insbesondere ist auch den Fig. zu entnehmen, dass der erste und zweite Abschnitt 54, 56 des Klemmabschnitts 52 zumindest vor der Fixierung des Fittings 12 an dem Vierkantrohr einen stumpfen Winkel einschließen, oder dass der Halteabschnitt 66 senkrecht zur Längsachse des Fittings 12 verläuft, so dass der Bolzen 70 parallel zu der Längsachse des Fittings 12 verstellt wird.

Unabhängig hiervon ist Folgendes anzumerken. Der Klemmabschnitt 52 sollte bevorzugterweise so ausgebildet sein, dass der zweite Abschnitt 56 im Moment des Spannens parallel oder in etwa parallel zu dem Halteabschnitt 66 verläuft, so dass die Krafteinwirkung des Gewindestifts 70 weitgehend senkrecht zum zweiten Abschnitt 56 des Klemmabschnittes 52 verläuft. Der Klemmabschnitt 52 bewirkt eine Umlenkung der Spannkraft des Bolzens um 90°, radial zum Endfitting 12 und somit zum Vierkantrohr 10.

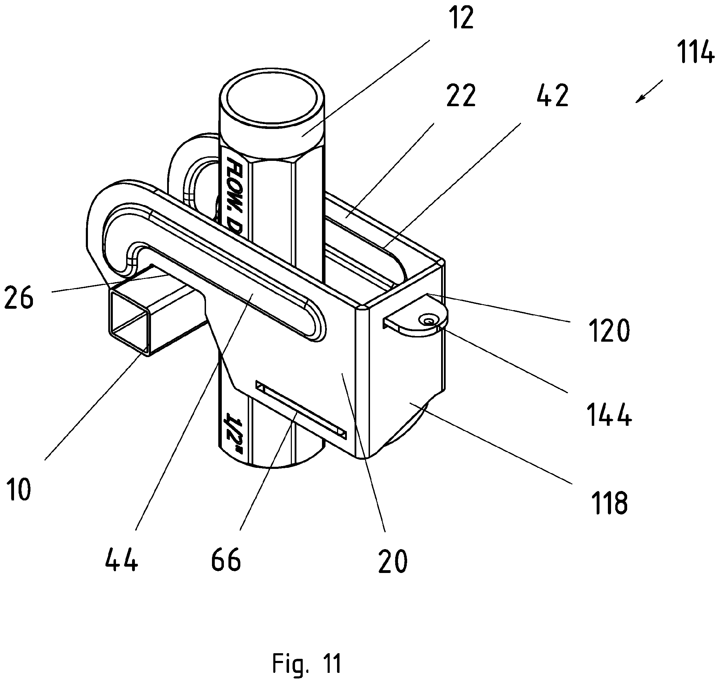

Den Fig. 11 bis 17 sind weitere bevorzugte Ausführungsformen von Spannvorrichtungen 114, 214, 314 zu entnehmen. Dabei werden entsprechend den Fig. 1 bis 10 grundsätzlich für gleiche Elemente gleiche Bezugszeichen verwendet.

Die Spannvorrichtungen 114, 214, 314 verwirklichen gleichfalls die erfindungsgemäße Lehre, dass von einem im Schnitt U-förmigen Basiselement 16 ein Klemmabschnitt 152, 252, 352 ausgeht, der auf ein insbesondere als Fitting ausgebildetes zweites Element 12 einwirkt, um dieses an einem ersten Element 10, wie insbesondere Vierkantrohr, zu fixieren. Abweichend von dem Ausführungsbeispiel der Fig. 1 bis 10 ist der Klemmabschnitt als gesondertes Bauteil ausgebildet, das nachstehend als Klemmelement 152, 252, 352 bezeichnet wird und das lösbar mit dem Basiselement 16 verbunden und zu diesem schwenkbar ist, um wahlweise mit dem zweiten Element 12, das nachstehend gleichfalls als Fitting bezeichnet wird, zum Fixieren wechselzuwirken oder dieses zu der Spannvorrichtung 114, 214, 314 zu verstellen.

Die den Fig. 11 bis 17 zu entnehmenden Ausführungsformen der Spannvorrichtung 114, 214, 314 weisen in Bezug auf die Seitenschenkel 20, 22 mit den hakenförmig ausgebildeten Aussparungen 24, 26 zur Aufnahmen für das im Ausführungsbeispiel als Vierkantrohr ausgebildete erste Element 10 und den Halteabschnitt 66 mit dem Gewindestift 70 eine gleiche Konstruktion wie das erste Ausführungsbeispiel auf, so dass der Gewindestift 70, auf das jeweilige nachstehend näher zu beschreibende Klemmelement 152, 252, 352 einwirkt.

Entsprechend sind nach dem zweiten Ausführungsbeispiel (Spannvorrichtung 114) die Seitenschenkel 20, 22 des Basiselements 16 integral mit einem Querschenkel 118 ausgebildet, ohne dass jedoch Materialschwächungen entsprechend dem Ausführungsbeispiel der Figuren 1 bis 10 vorhanden sind. Hierdurch erfährt die Spannvorrichtung 114 eine höhere Steifigkeit. In dem Querschenkel 118 ist eine schlitzförmige Durchbrechung 120 vorgesehen, die von einem in Bezug auf das Fitting 12 fernliegenden oder ersten Abschnitt 154 des Klemmelementes 152 durchsetzt wird. Im freien außerhalb des Basiselements 16 verlaufenden Endbereich kann dieser einen zum Beispiel durch Pressen ausgebildeten Vorsprung 144 aufweisen, um eine Verliersicherung zu bilden.

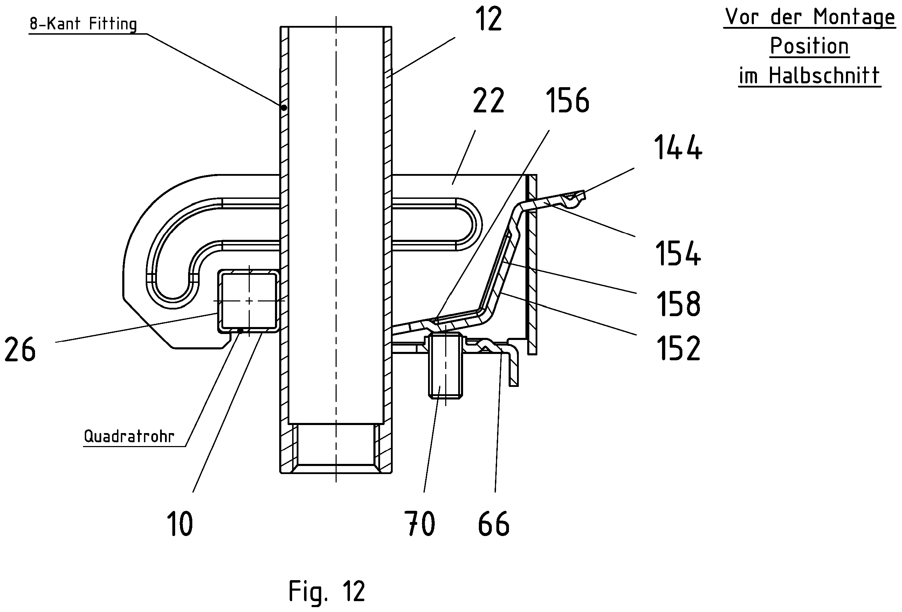

Das Klemmelement 152 besteht aus dem ersten Abschnitt 154 und einem mit dem Fitting 12 wechselwirkenden zweiten Abschnitt 156, zwischen denen sich ein Mittenabschnitt 158 erstreckt. Die Abschnitte 154, 156, 158 spannen jeweils eine Ebene auf, wobei zwischen dem Mittenabschnitt 158 und dem ersten Abschnitt 154 einerseits und dem zweiten Abschnitt 156 andererseits jeweils ein stumpfer Winkel verläuft, wie die Schnittdarstellung gemäß Fig. 12 verdeutlicht. Das Klemmelement 158 weist folglich eine Art Z-Form auf.

Der zweite Abschnitt 156 kann endseitig derart ausgebildet sein, dass ein formschlüssiges Umfassen des Fittings 12 ermöglicht wird.

Mit dem zweiten Abschnitt 156 wirkt der Gewindestift 70 zusammen, um das Klemmelement 152 derart zu verschwenken, dass der Fitting 12 in Richtung des Vierkantrohrs 24 verstellt und an diesem fixiert wird.

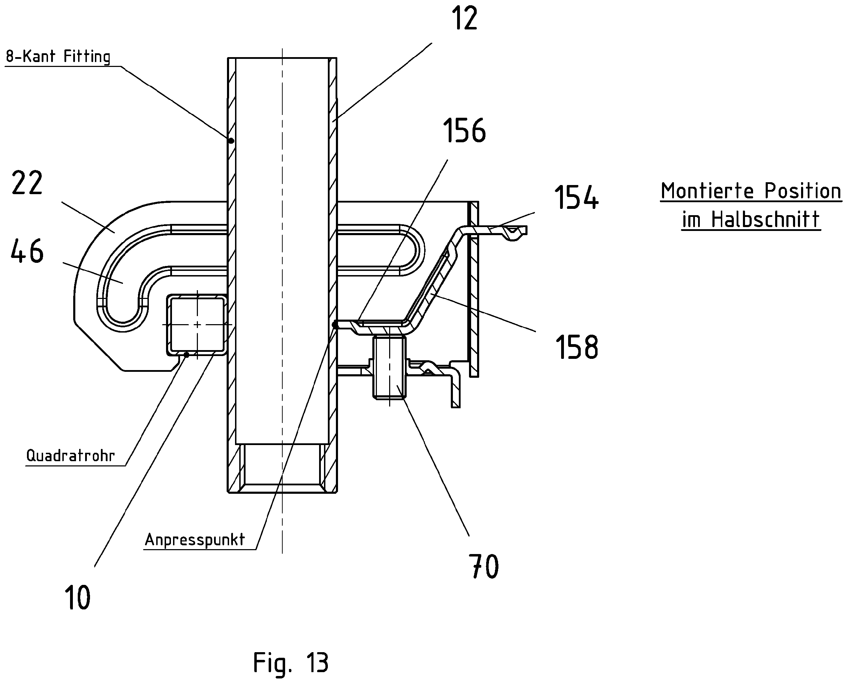

In der Montagestellung (Fig. 13) sollte der zweite Abschnitt 156 senkrecht zur Längsachse des Fittings 12 verlaufen, also in der zeichnerischen Darstellung horizontal.

Wie sich aus der Schnittdarstellung gemäß Fig. 12 ergibt, weist das Klemmelement 152 eine in seiner Längsrichtung verlaufende Versteifung auf, die durch eine Sicke gebildet ist.

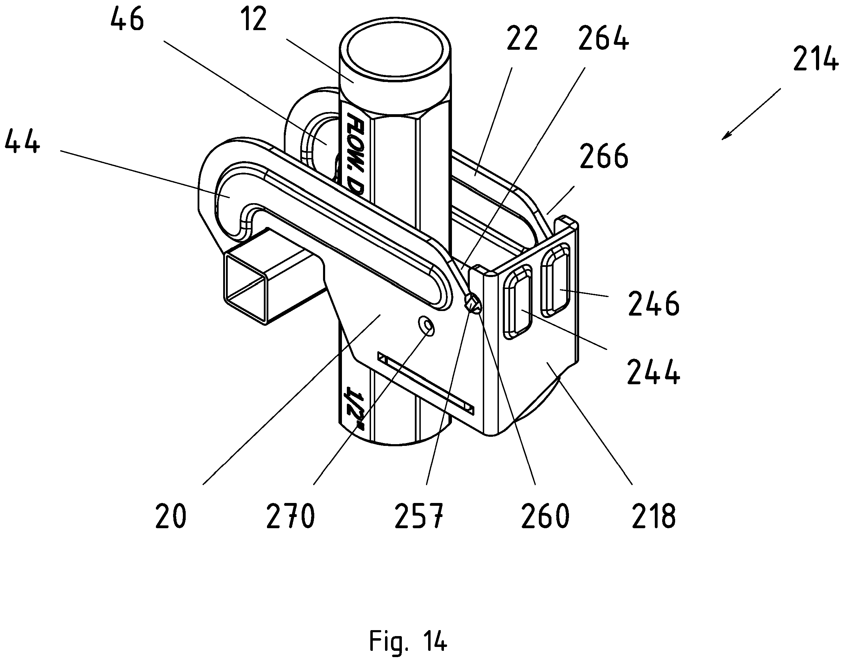

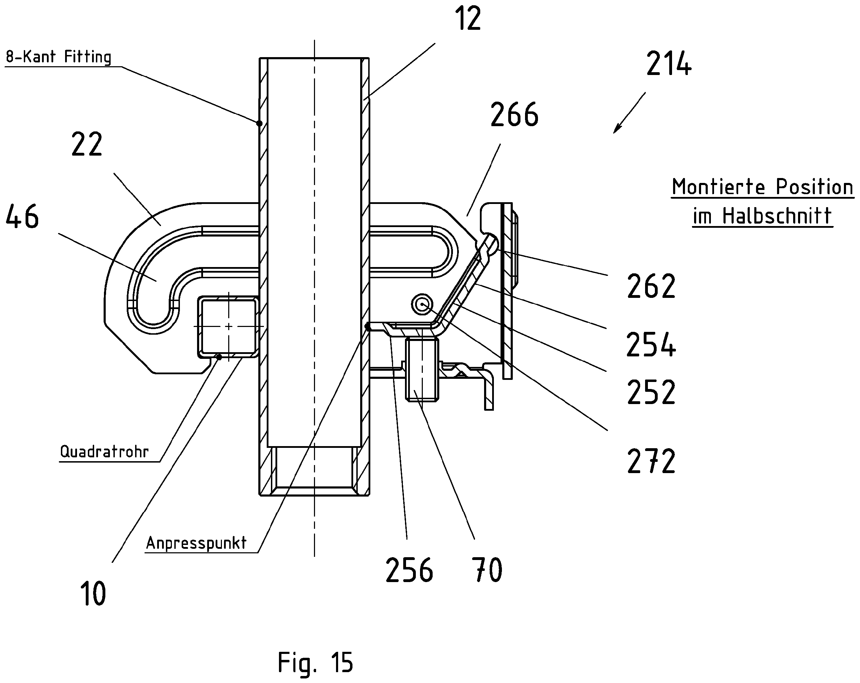

Das Ausführungsbeispiel der Fig. 14 und 15 zeigt die Spannvorrichtung 214, die sich von dem Ausführungsbeispiel der Fig. 11 bis 13 dahingehend unterscheidet, dass ein Klemmelement 252 verwendet wird, das schwenkbar in Aufnahmen 260, 262 gelagert ist, die über V-förmige Aussparungen 264, 266 in den Seitenschenkeln 20, 22 des Basiselements 16 zugänglich sind. In den als Aussparungen ausgebildeten Aufnahmen 260, 262 erstrecken sich seitlich über den Seitenlängsrändem des Klemmelementes 252 vorstehende Vorsprünge, von denen einer (Vorsprung 257) der Fig. 14 zu entnehmen ist.

Hierdurch wird ein Verschwenken des Klemmelementes 252 ermöglicht, das im Ausführungsbeispiel eine L-Form aufweist, wobei der erste die Vorsprünge 257 im freien Endbereich aufweisende Abschnitt 254 in den mit dem Fitting 12 wechselwirkenden zweiten Abschnitt 256 über einen stumpfen Winkel übergeht.

Um eine Verliersicherung zu bilden, insbesondere beim Transport ein Herausrutschen des Klemmelements 252 zu verhindern, verläuft dieses zwischen dem Gewindestift 70 und in die Seitenwandungen 20, 22 gepressten Mulden 270, 272.

Der Querschenkel 218 des Basiselements 16 weist zusätzliche Versteifungen in Form von Sicken 244, 246 auf, um eine hinreichende Stabilität sicherzustellen.

In der Fig. 15 ist in Schnittdarstellung die Spannvorrichtung 214 in der Position dargestellt, in der der zweite Abschnitt 256 des Spannelements 252 auf den Fitting 12 einwirkt, um diesen kraftzubeaufschlagen und gegen das Vierkantrohr 14 zu drücken.

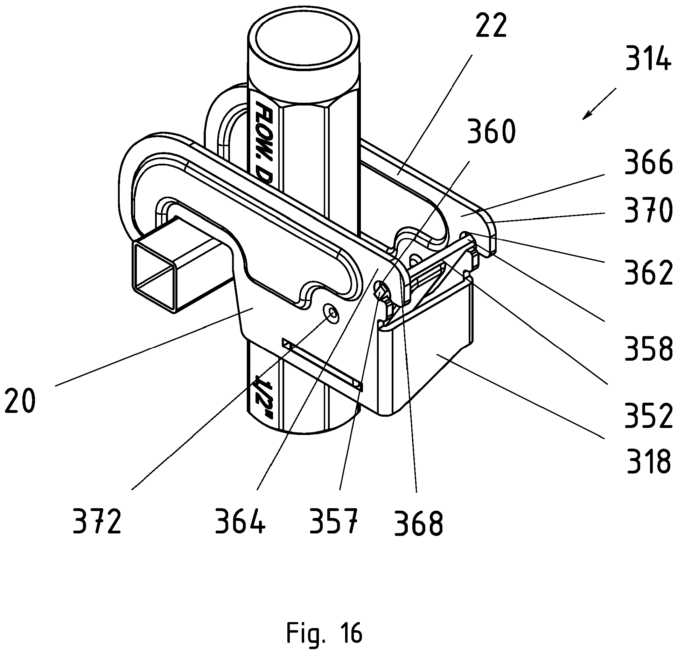

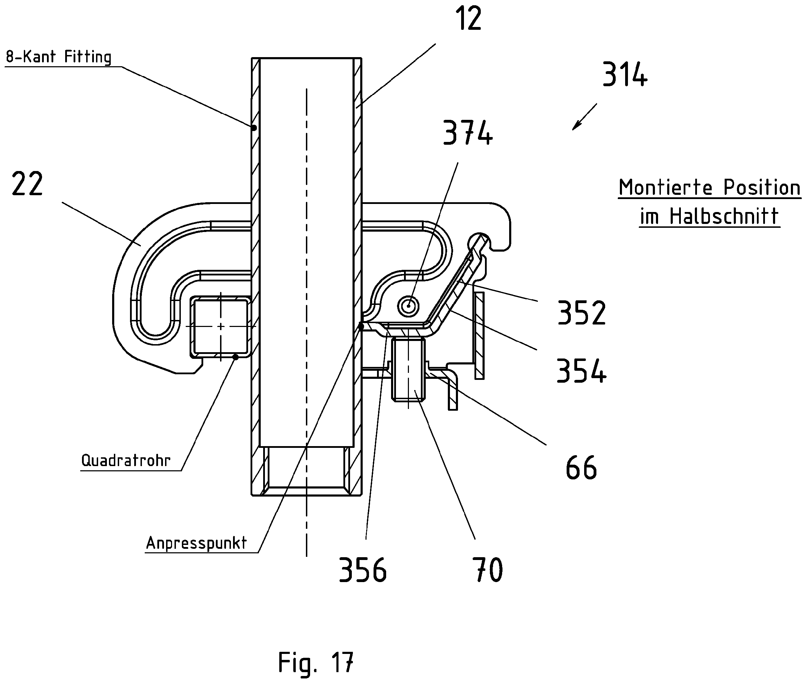

Die vierte Ausführungsform (Fig. 16, 17) zeigt die Spannvorrichtung 314, die - wie die Ausführungsbeispiele der Fig. 11 bis 13 und 14, 15 - bezüglich des Basiselementes 16 mit den Seitenschenkeln 20, 22 und dem diese verbindenden Querschenkel 318 grundsätzlich einen gleichen Aufbau auf wie die erste Ausführungsform (Fig. 1 bis 10) aufweisen. Gleiches gilt bezüglich des Halteabschnitts 66 und des Gewindestifts 70.

Zur Lagerung eines Klemmelementes 352 weisen die Seitenschenkel 20, 22 in ihren hinteren Randbereichen 364, 366 bogenförmige Abschnitte 368, 370 auf, die Aufnahmen 360, 362 bereichsweise umgeben, in die über den Seitenrändern des querschenkelseitig verlaufenden ersten Abschnitts 354 des Klemmelementes 352 vorstehende Abschnitte bzw. Vorsprünge 356, 358 eingreifen, so dass ein Verschwenken des Klemmelementes 352 ermöglicht wird.

Entsprechend dem ersten und dritten Ausführungsbeispiel geht der erste Abschnitt 354 des Klemmelements 352 über einen stumpfen Winkel in einen zweiten Abschnitt 356 des Klemmelementes 352 über, der mit dem Fitting 12 in zuvor erläuterter Art wechselwirken kann.

Die Spannvorrichtung 314 ist in Fig. 17 in montierter Position dargestellt.

Entsprechend dem Ausfiihrungsbeispiel der Fig. 14 und 15 verläuft das Klemmelement 352 zwischen dem Gewindestift 70, der in den Halteabschnitt 66 gedreht wird, und Verliersicherungen 370, 372, die als Prägungen ausgebildet sein können.

Im Übrigen wird bezüglich der Ausführungsbeispiele der Fig. 11 bis 17 auf die Erläuterungen zum Ausführungsbeispiel der Fig. 1 bis 10 verwiesen, um Wiederholungen zu vermeiden.

Zum Montieren des Fittings 12 wird die Spannvorrichtung im Lieferzustand radial zu dem insbesondere als Mehrkantrohr ausgebildete Fitting 12 bewegt, so dass sich dieser zwischen den Seitenschenkeln befindet, um sodann die Spannvorrichtung in das Vierkantrohr 26 einzuhaken. Sodann wird durch Verstellen des Schraubbolzens und damit des Halteabschnitts der Klemmabschnitt in Richtung des Fittings 12 verstellt, damit dieser kraftschlüssig an dem Vierkantrohr 10 anliegt und somit eine eindeutige Fixierung und Positionierung sichergestellt ist.

## Patentansprüche

1. Spannvorrichtung (14, 114, 214, 314) zum Verbinden eines langgestreckten ersten Elements (10), wie Vierkantprofil, mit einem quer zu diesem verlaufenden zweiten Element (12), wie Fitting, insbesondere Endfitting eines Sprinklerschlauchs, umfassend
- ein Basiselement (16), das in einem senkrecht zu dem zweiten Element verlaufenden Schnitt eine U-Form mit Querschenkel (18) und von diesem ausgehenden Seitenschenkeln (20, 22) aufweist, zwischen denen sich in Montageposition das zweite Element erstreckt, und
- eine Spanneinrichtung (52, 66), die geeignet ist, dass mittels dieser auf das zweite Element zum Fixieren an dem ersten Element eine Kraft einwirkt,
wobei die Spanneinrichtung (52, 66) einen von dem Querschenkel (18) oder den Seitenschenkeln (20, 22) ausgehenden oder den Querschenkel durchsetzenden Klemmabschnitt (52, 152, 252, 352) aufweist,
**dadurch gekennzeichnet,**
**dass** die Spanneinrichtung (52, 66) des Weiteren einen von dem Basiselement (16) ausgehenden, eine Durchgangsöffnung (68) aufweisenden senkrecht sowohl zu den Seitenschenkeln als auch dem Querschenkel verlaufenden Halteabschnitt (66) aufweist, der zwischen den Seitenschenkeln (20, 22) fixiert ist, wobei die Durchgangsöffnung zur Aufnahme eines Betätigungselementes (70) derart ausgebildet ist, dass das Betätigungselement beim Verstellen in Richtung des Klemmabschnitts auf diesen einwirkt, der zum Anliegen an dem zweiten Element (12) und zur Kraftbeaufschlagung zur Fixierung an dem ersten Element (10) ausgebildet ist.

2. Spannvorrichtung nach Anspruch 1,
**dadurch gekennzeichnet,**
**dass** der Klemmabschnitt (152, 252, 352) ein gesondertes Klemmelement ist und lösbar verbunden mit und verschwenkbar zu dem Basiselement (16) ist.

3. Spannvorrichtung nach Anspruch 1 oder 2,
**dadurch gekennzeichnet,**
**dass** das Klemmelement (152, 252, 352) einen in Bezug auf das zweite Element (16) fernliegenden ersten Abschnitt (154, 254, 354) und einen mit dem zweiten Element (12) wechselwirkenden zweiten Abschnitt (156, 256, 356) aufweist, und dass der erste Abschnitt den Querschenkel (118) des Basiselements (16) durchsetzt oder von jedem seiner Seitenränder ein Vorsprung (257, 357, 358) ausgeht, der in eine Aufnahme, wie Aussparung (260, 262, 360, 362), in den Seitenschenkeln (20, 22) zur Lagerung des Klemmelements eingreift.

4. Spannvorrichtung nach zumindest Anspruch 3,
**dadurch gekennzeichnet,**
**dass** der den Querschenkel (118) des Basiselements (16) durchsetzende erste Abschnitt (154) über einen Mittelabschnitt (158) in den zweiten Abschnitt (156) übergeht, wobei vorzugsweise die einander zugewandten Flächen von dem Mittelabschnitt (158) und dem ersten Abschnitt (154) einerseits und dem zweiten Abschnitt (156) andererseits jeweils einen stumpfen Winkel einschließen.

5. Spannvorrichtung nach zumindest Anspruch 3,
**dadurch gekennzeichnet,**
**dass** jeder Seitenschenkel (20, 22) einen vorzugsweise V-förmig ausgebildeten Ausschnitt (264, 266) aufweist, der in die Aufnahme (260, 262) übergeht, die vorzugsweise an dem Querschenkel (218) angrenzt, oder
**dass** oberer Rand (364, 366) eines jeden Seitenschenkels (20, 22) in einen in Richtung des Querschenkels (318), insbesondere dessen Außenseite, sich erstreckenden bogenförmigen Abschnitt (368, 370) übergeht, der die Aufnahme (360, 362) begrenzt.

6. Spannvorrichtung nach zumindest Anspruch 3,
**dadurch gekennzeichnet,**
**dass** sich das Klemmelement (252, 352) zwischen dem Halteabschnitt (66) und einem über der jeweiligen Innenseite der Seitenschenkel (20, 22) vorstehenden als Verliersicherung dienenden Vorsprung (270, 272, 372, 374) erstreckt und/oder dass der den Querschenkel (118) durchsetzende erster Abschnitt (154) des Klemmelements (152) eine einen Vorsprung bildende Prägung (144) aufweist.

7. Spannvorrichtung nach zumindest Anspruch 1,
**dadurch gekennzeichnet,**
**dass** der Klemmabschnitt (52) zumindest abschnittsweise aus dem Querschenkel (18) ausgeschnitten ist, wobei gegebenenfalls ein einen Verformungsbereich bildender Übergangsbereich (58) zwischen dem Klemmabschnitt (52) und dem Querschenkel (18) materialgeschwächt ist, insbesondere im Übergangsbereich Aussparungen (60, 62, 64) vorhanden sind.

8. Spannvorrichtung nach zumindest Anspruch 1 oder 7,
**dadurch gekennzeichnet,**
**dass** der Klemmabschnitt (52) aus einem von dem Querschenkel (18) ausgehenden inneren ersten Abschnitt (54) und einem einen stumpfen Winkel zu diesem einschließenden zweiten Abschnitt (56) besteht, der zum Anliegen, insbesondere formschlüssigen Anliegen, an dem zweiten Element (12) ausgebildet ist.

9. Spannvorrichtung nach zumindest Anspruch 1,
**dadurch gekennzeichnet,**
**dass** die Durchgangsöffnung (68) des Halteabschnitts (66) ein Innengewinde aufweist und dass das Betätigungselement (70) ein Schraubbolzen ist.

10. Spannvorrichtung nach zumindest Anspruch 1,
**dadurch gekennzeichnet,**
**dass** der Halteabschnitt (66) integral von einem der Seitenschenkel (22) ausgeht und in dem anderen Seitenschenkel (20) fixiert ist, vorzugsweise durch Eingreifen eines endseitigen Abschnitts (72) des Halteabschnitts in eine Aufnahme (74), wie Schlitz, des anderen Seitenschenkels und/oder dass der Halteabschnitt (66) in dem anderen Seitenschenkel (20) durch Heften oder zusätzlich durch Heften, wie Schweißen, fixiert ist.

11. Spannvorrichtung nach zumindest einem der vorhergehenden Ansprüche,
**dadurch gekennzeichnet,**
**dass** ein mit dem zweiten Element (12) wechselwirkender Bereich des Klemmabschnitts (52) bzw. Klemmelements (152, 252, 352) ausgebildet ist zum formschlüssigen Anliegen an dem zweiten Element (12).

12. Spannvorrichtung nach zumindest einem der vorhergehenden Ansprüche,
**dadurch gekennzeichnet,**
**dass** die Seitenschenkel (20, 22) in ihren freien Endbereichen zum abschnittsweisen Unterfassen des ersten Elementes (10) hakenförmig ausgebildet sind.

13. Spannvorrichtung nach zumindest einem der vorhergehenden Ansprüche,
**dadurch gekennzeichnet,**
**dass** der Seitenschenkel (20, 22) eine insbesondere an dessen Verlauf angepasste Materialprägung (44, 46) und/oder dass der Klemmabschnitt (52) bzw. das Klemmelement (152, 252, 352) eine Materialprägung (76) und/oder der Querschenkel (18) eine Materialprägung aufweist.

14. Spannvorrichtung nach zumindest einem der vorhergehenden Ansprüche,
**dadurch gekennzeichnet,**
**dass** die Spannvorrichtung (14) aus einem Blechelement ausgeschnitten, wie ausgestanzt, ist und vorzugsweise eine Dicke d mit 1,0 mm ≤ d ≤ 3 mm, besonders bevorzugt d in etwa 2 mm, aufweist.

15. Spannvorrichtung nach zumindest Anspruch 3 und/oder 8,
**dadurch gekennzeichnet,**
**dass** der zweite Abschnitt (56) des Klemmabschnitts bzw. Klemmelements (52, 152, 252, 352) insbesondere in seinem freien Endbereich seitliche Abschnitt (100, 101) zum Anliegen an den Innenflächen der Seitenschenkel (20, 22) aufweist.

16. Verfahren zum Montieren eines, vorzugsweise eine Mehrkantgeometrie aufweisenden, Fittings (16), insbesondere Endfittings eines Sprinklerschlauchs, an einem Vierkantrohr (10) unter Verwendung einer Spannvorrichtung (14, 114, 214, 314) nach zumindest einem der vorhergehenden Ansprüche, wobei die Spanneinrichtung (52, 66) radial zu dem Fitting zu dessen Aufnahme bewegt und nach Einbringen des Fittings in die Spannvorrichtung zwischen den Seitenschenkeln die Spannvorrichtung in das Vierkantrohr über hakenförmig ausgebildete Endabschnitte der Seitenschenkel eingehakt wird, wobei insbesondere das Fitting kraftschlüssig in Längsrichtung des Fittings und radial formschlüssig an dem Vierkantrohr anliegt.

## Claims

1. Clamping device (14, 114, 214, 314) for connecting an elongated first element (10), such as a square tube section, to a second element (12) running transversely thereto, such as a fitting, in particular an end fitting of a sprinkler hose, comprising
- a basic element (16) having, in a section vertical to the second element, a U shape with cross member (18) and side members (20, 22) extending therefrom, between which members extends the second element in the mounting position, and
- a clamping unit (52, 66) adapted such that by using it a force acts on the second element for fixing to the first element, said clamping unit (52, 66) having a clamping section (52, 152, 252, 352) extending from the cross member (18) or from the side members (20, 22) or passing through said cross member,
wherein
the clamping unit (52, 66) furthermore has a retaining section (66) extending from the basic element (16) and having a passage opening (68) vertical both to the side members and to the cross member, said retaining section being fixed between the side members (20, 22), the passage opening being designed for receiving an actuating element (70) such that said actuating element acts on the clamping section during movement in the direction thereof, the clamping section being designed to contact the second element (12) and to apply force for fixing to the first element (10).

2. Clamping device according to claim 1,
wherein
the clamping section (152, 252, 352) is a separate clamping element and is detachably connected to the basic element (16) and swivellable relative thereto.

3. Clamping device according to claim 1 or 2,
wherein
the clamping element (152, 252, 352) has a first section (154, 254, 354) at a far side relative to the second element (12) and a second section (156, 256, 356) interacting with said second element (12), and the first section passes through the cross member (118) of the basic element (16) or a projection (257, 357, 358) extends from each of its side rims and engages in a receptacle, such as a recess (260, 262, 360, 362), in the side members (20, 22) for mounting of the clamping element.

4. Clamping device according to at least claim 3,
wherein
the first section (154) passing through the cross member (118) of the basic element (16) merges via a central section (158) into the second section (156), the facing surfaces of the central section (158) and of the first section (154) on the one hand and of the second section (156) on the other hand each preferably forming an obtuse angle.

5. Clamping device according to at least claim 3,
wherein
each side member (20, 22) has a section (264, 266), preferably designed V-shaped, merging into the receptacle (260, 262) which preferably adjoins the cross member (218), or the upper rim (364, 366) of each side member (20, 22) merges into an arch-like section (368, 370) extending in the direction of the cross member (318), in particular of its outside, which limits the receptacle (360, 362).

6. Clamping device according to at least claim 3,
wherein
the clamping element (252, 352) extends between the retaining section (66) and a projection (270, 272, 372, 374) projecting beyond the respective inside of the side members (20, 22) and acting as a loss preventer, and/or the first section (154) of the clamping element (152) passing through the cross member (118) has an indentation (144) forming a projection.

7. Clamping device according to at least claim 1,
wherein
the clamping section (52) is cut at least in some sections out of the cross member (18), where a transition area (58) forming a deformation area optionally has thinner material between the clamping section (52) and the cross member (18), and in particular recesses (60, 15, 62, 64) are provided in the transition area.

8. Clamping device according to at least claim 1 or 7,
wherein
the clamping section (52) consists of an inner first section (54) extending from the cross member (18) and a second section (56) forming an obtuse angle thereto, which is designed to contact, in particular positively contact, the second element (12).

9. Clamping device according to at least claim 1,
wherein
the passage opening (68) of the retaining section (66) has an internal thread, and the actuating element (70) is a threaded bolt.

10. Clamping device according to at least claim 1,
wherein
the retaining section (66) extends integrally from one side member (22) and is fixed in the other side member (20), preferably by engagement of an end section (72) of the retaining section in a receptacle (74), such as a slot, of the other side member, and/or the retaining section (66) is fixed in the other side member (20) by tacking or additionally by tacking, such as welding.

11. Clamping device according to at least one of the preceding claims,
wherein
an area of the clamping section (52) or of the clamping element (152, 252, 352) interacting with the second element (12) is designed to positively contact said second element (12).

12. Clamping device according to at least one of the preceding claims,
wherein
the side members (20, 22) are designed hook-like at their free end areas for gripping underneath some sections of the first element (10).

13. Clamping device according to at least one of the preceding claims,
wherein
the side member (20, 22) has a material indentation (44, 46), in particular adapted to its curve, and/or the clamping section (52) or the clamping element (152, 252, 352) has a material indentation (76), and/or the cross member (18) has a material indentation.

14. Clamping device according to at least one of the preceding claims,
wherein
the clamping device (14) is cut, such as stamped, out of a sheet-metal element and preferably has a thickness d of 1.0 mm ≤ d ≤ 3 mm, particularly preferably d of approximately 2 mm.

15. Clamping device according to at least claim 3 and/or 8,
wherein
the second section (56) of the clamping section or of the clamping element (52, 152, 252, 352) has in particular in its free end area lateral sections (100, 101) to contact the inner surfaces of the side members (20, 22).

16. Method for mounting a fitting (16), preferablyhaving a polygonal geometry, in particular an end fitting of a sprinkler hose, to a square tube (10) using a clamping device (14, 114, 214, 314) according to at least one of the preceding claims, where the clamping unit (52, 66) is moved radially relative to the fitting to receive it and after insertion of the fitting into the clamping device between the side members said clamping device is hooked into the square tube using side member end sections designed hook-like, the fitting in particular being in non-positive contact in the longitudinal direction of the fitting and in positive contact with the square tube radially.

## Revendications

1. Dispositif de serrage (14, 114, 214, 314) pour relier un premier élément allongé (10), tel qu'un profil carré à un second élément (12) s'étendant transversalement à celui-ci, tel qu'un raccord, notamment un embout de tuyau d'arrosage, comprenant
- un élément de base (16) qui, en coupe s'étendant perpendiculairement au second élément, présente une forme en U avec un côté transversal (18) et des côtés latéraux (20, 22) partant de ceux-ci, entre lesquels le second élément s'étend en position de montage, et
- un mécanisme de serrage (52, 66) qui est conçu de manière qu'à l'aide de celui-ci, une force agit sur le second élément à fixer au premier,
sachant que le mécanisme de serrage (52, 66) présente une section de serrage (52, 152, 252, 352) partant du côté transversal (18) ou des côtés latéraux (20, 22) ou traversant le côté transversal,
**caractérisé en ce**
**que** le mécanisme de serrage (52, 66) présente, de plus, une section de maintien (66) partant de l'élément de base (16), présentant un orifice de traversée (68), s'étendant perpendiculairement à la fois aux côtés latéraux et au côté transversal, qui est fixée entre les côtés latéraux (20, 22), sachant que l'orifice de traversée est conçu de manière à accueillir un élément d'actionnement (70) de sorte qu'en se déplaçant en direction de la section de serrage, l'élément d'actionnement agit sur celle-ci qui est conçue pour reposer sur le second élément (12) et pour appliquer une force destinée à la fixation au premier élément (10).

2. Dispositif de serrage selon la revendication 1,
**caractérisé en ce**
**que** la section de serrage (152, 252, 352) est un élément de serrage séparé et relié de manière amovible avec l'élément de base (16) et basculable par rapport celui-ci.

3. Dispositif de serrage selon la revendication 1 ou 2,
**caractérisé en ce**
**que** l'élément de serrage (152, 252, 352) présente une première section (154, 254, 354) éloignée du second élément (16) et une seconde section (156, 256, 356) interagissant avec le second élément (12), et que la première section traverse le côté transversal (118) de l'élément de base (16) ou qu'une saillie (257, 357, 358) part de chacun de ses bords latéraux, laquelle s'engage dans un logement tel qu'un évidement (260, 262, 360, 362) dans les côtés latéraux (20, 22) pour supporter l'élément de serrage.

4. Dispositif de serrage selon au moins la revendication 3,
**caractérisé en ce**
**que** la première section (154) traversant le côté transversal (118) de l'élément de base (16) se prolonge dans la seconde section (156) par le biais de la section médiane (158), sachant que de préférence les surfaces tournées l'une vers l'autre de la section médiane (158) et de la première section (154) d'une part et de la seconde section (156) d'autre part comprennent respectivement un angle obtus.

5. Dispositif de serrage selon au moins la revendication 3,
**caractérisé en ce**
**que** chaque côté latéral (20, 22) présente une section (264, 266) conçue de préférence en forme de V qui se prolonge dans le logement (260, 262) qui avoisine de préférence le côté transversal (218), ou
**que** le bord supérieur (364, 366) de chaque côté latéral (20, 22) se prolonge dans une section (368, 370) en forme d'arc, qui délimite le logement (360, 362) et s'étend en direction du côté transversal (318), notamment de son côté extérieur.

6. Dispositif de serrage selon au moins la revendication 3,
**caractérisé en ce**
**que** l'élément de serrage (252, 352) s'étend entre la section de maintien (66) et une saillie (270, 272, 372, 374) dépassant de la face intérieure des côtés latéraux (20, 22) et servant de système anti-perte et/ou que la première section (154) de l'élément de serrage (152), traversant le côté transversal (118) présente un embossage (144) formant une saillie.

7. Dispositif de serrage selon au moins la revendication 1,
**caractérisé en ce**
**que** la section de serrage (52) est découpée au moins partiellement dans le côté transversal (18), sachant que, le cas échéant, une zone de transition (58) entre la section de serrage (52) et le côté transversal (18), formant une zone de déformation présente une matière affaiblie, que notamment des évidements (60, 62, 64) sont présents dans la zone de transition.

8. Dispositif de serrage selon au moins la revendication 1 ou 7,
**caractérisé en ce**
**que** la section de serrage (52) est constituée d'une première section intérieure (54) partant du côté transversal (18) et d'une seconde section (56) comprenant un angle obtus par rapport à la première section, qui est conçue pour reposer, notamment par complémentarité de forme, sur le second élément (12).

9. Dispositif de serrage selon au moins la revendication 1,
**caractérisé en ce**
**que** l'orifice de traversée (68) de la section de maintien (66) présente un filetage intérieur et que l'élément d'actionnement (70) est un boulon fileté.

10. Dispositif de serrage selon au moins la revendication 1,
**caractérisé en ce**
**que** la section de maintien (66) part intégralement d'un des côtés latéraux (22) et est fixée dans l'autre côté latéral (20), de préférence par l'engagement d'une section côté extrémité (72) de la section de maintien dans un logement (74), tel qu'une fente, de l'autre côté latéral et/ou que la section de maintien (66) est fixée dans l'autre côté latéral (20) par assemblage, par exemple par soudage.

11. Dispositif de serrage selon au moins une des revendications précédentes,
**caractérisé en ce**
**qu'**une zone de la section de serrage (52) ou de l'élément de serrage (152, 252, 352) interagissant avec le second élément (12) est conçue pour reposer par complémentarité de forme sur le second élément (12).

12. Dispositif de serrage selon au moins une des revendications précédentes,
**caractérisé en ce**
**que** les côtés latéraux (20, 22) sont constitués en forme de crochet au niveau de leurs extrémités libres pour saisir par en dessous le premier élément (10).

13. Dispositif de serrage selon au moins une des revendications précédentes,
**caractérisé en ce**
**que** le côté latéral (20, 22) présente un embossage du matériau (44, 46) notamment adapté à son tracé et/ou que la section de serrage (52) ou l'élément de serrage (152, 252, 352) présente un embossage du matériau (76) et/ou que le côté transversal (18) présente un embossage du matériau.

14. Dispositif de serrage selon au moins une des revendications précédentes,
**caractérisé en ce**
**que** le dispositif de serrage (14) est découpé, par exemple découpé à la matrice, dans un élément en tôle et présente de préférence une épaisseur d telle que 1,0 mm ≤ d ≤ 3 mm, notamment de préférence d égale à environ 2 mm.

15. Dispositif de serrage selon au moins la revendication 3 et/ou 8,
**caractérisé en ce**
**que** la seconde section (56) de la section de serrage ou de l'élément de serrage (52, 152, 252, 352) présente notamment au niveau de son extrémité libre des sections latérales (100, 101) destinées à reposer sur les surfaces intérieures des côtés latéraux (20, 22).

16. Procédé de montage d'un raccord (16) présentant de préférence une géométrie polygonale, notamment un embout de tuyau d'arrosage, sur un tuyau carré (10) en utilisant un dispositif de serrage (14, 114, 214, 314) selon au moins une des revendications précédentes, sachant que le mécanisme de serrage (52, 66) se déplace, par rapport à son logement, radialement au raccord et est accroché au tuyau carré au moyen des sections d'extrémité conçues sous forme de crochet, des côtés latéraux, après installation du raccord dans le dispositif de serrage entre les côtés latéraux, sachant que notamment le raccord repose par liaison de force dans le sens longitudinal du raccord et radialement par complémentarité de forme sur le tuyau carré.
